# EUROPÄISCHE PATENTSCHRIFT

(11) **EP 1 982 794 B1**
(45) Veröffentlichungstag und Bekanntmachung des Hinweises auf die Patenterteilung: **02.06.2010**
(21) Anmeldenummer: 08006722.6
(22) Anmeldetag: 02.04.2008
(51) Int. Cl.: B23Q 11/00

(54) **Wechselbares Werkzeugaggregat für Werkzeugmaschinen mit Spänenabsaugeinrichtung**
Exchangeable tool holder for machine tools with chip suction device
Porte-outil échangeable pour machine-outil avec système d'aspiration des copeaux

(30) Priorität: 18.04.2007 DE 202007005571 U
(43) Veröffentlichungstag der Anmeldung: 22.10.2008
(73) Patentinhaber: Abemaka GmbH, 77716 Hofstetten (DE)
(72) Erfinder: Buehrer, Armin, 77716 Haslach (DE); Hiss, Heike, 77736 Zell a.H. (DE)
(74) Vertreter: Goy, Wolfgang

(56) Entgegenhaltungen:
- EP-A- 0 667 209
- EP-A- 1 279 464
- EP-A- 1 872 901
- WO-A-2007/113140
- US-A- 3 167 260

## Beschreibung

Die Erfindung betrifft ein wechselbares Werkzeugaggregat für Werkzeugmaschinen zur spanabhebenden Bearbeitung von Werkstücken nach dem Oberbegriff des Anspruchs 1 (siehe z.B., EP 1 279 464 A1).

Das erfindungsgemäße Werkzeugaggregat ist zum spanabhebenden Bearbeiten von sämtlichen Materialien gedacht, welche grundsätzlich spanabhebend bearbeitet werden können, also insbesondere Holz und Holzersatzstoffe, Kunststoffe sowie Aluminium. Gleichgültig ist dabei, ob der Spindelausgang horizontal oder vertikal ist, ob ein oder mehrere Spindelausgänge vorgesehen sind, welche Bearbeitungsmethode angewendet wird und welche Schmierung eingesetzt wird. Dem Anwendungsbereich des erfindungsgemäßen Werkzeuaggregats sind somit keine Beschränkungen auferlegt.

Derartige spanabhebende Bearbeitungsvorrichtungen weisen zunächst ein entsprechendes spanabhebendes Werkzeug auf. Weiterhin ist für die anfallenden Späne eine Absaugeinrichtung vorgesehen. Allerdings besteht bei dieser Absaugeinrichtung das Problem oftmals darin, daß nicht immer alle Späne komplett abgesaugt werden.

Die EP 1 279 464 A1 zeigt ein Werkzeug mit einer Absaughaube sowie einem durch eine Federbandspirale gebildeten, längenvariablen Saugabschnitt, welche zusammen eine Saugglocke definieren, der eingangs angegebenen Art. In einem Gehäuse des Werkzeugs ist dabei ein Schaft drehbar gelagert, über den das Werkzeug mit einer Werkzeugmaschine koppelbar ist. Mit dem Schaft ist drehfest eine Werkzeughalteeinrichtung gekoppelt, die der Aufnahme eines Werkzeugeinsatzes dient. Das Gehäuse weist weiterhin die vorbeschriebene Absaughaube auf, welche an eine Absaugeinrichtung angeschlossen ist. Innerhalb diese Absaughaube befindet sich eine Turbine mit Turbinenschaufeln. Diese Turbine ist auf der Werkzeughalterung angeordnet. Am vorderen Ende dieser Absaughaube befindet sich der vorbeschriebene längenvariable Saugabschnitt, welcher den Werkzeugeinsatz umgibt.

Die EP 0 667 209 A2 zeigt ein wechselbares Werkzeugaggregat mit einem rotierenden Werkzeug. Dieses rotierende Werkzeug wird durch eine Antriebsspindel angetrieben, wobei diese Antriebsspindel in einer Spindel eines Spindelkopfes der Werkzeugmaschine gelagert ist. Dem Werkzeug ist eine Absaugeinrichtung zugeordnet. Außerdem trägt das Werkzeug im oberen Bereich einstückige Flügelräder, welche die anfallenden Späne in Richtung Absaugeinrichtung leiten.

Der Erfindung liegt die **Aufgabe** zugrunde, bei einem wechselbaren Werkzeugaggregat für Werkzeugmaschinen zur spanabhebenden Bearbeitung von Werkstücken der eingangs angegebenen Art das Absaugen der entstehenden Späne mittels des Flügelrades zu verbessern.

Die technische **Lösung** ist gekennzeichnet durch die Merkmale im Kennzeichen des Anspruchs 1.

Die Grundidee des erfindungsgemäßen Werkzeugaggregats zur spanabhebenden Bearbeitung von Werkstücken besteht darin, daß außer der eigentlichen Absaugeinrichtung für die Späne im Bereich des Werkzeugs eine Zusatzabsaugeinrichtung angeordnet ist. Da sich diese Zusatzabsaugeinrichtung genau dort befindet, wo die Späne anfallen, ist dadurch ein sicherer Abtransport der Späne gewährleistet. Diese werden dann mittels der erfindungsgemäßen Zusatzabsaugeinrichtung der eigentlichen Absaugeinrichtung zugeführt, wo sie dann endgültig entsorgt werden. Das Grundprinzip der Zusatzabsaugeinrichtung besteht darin, daß sie einen Unterdruck erzeugt und daher die Späne ansaugt und in die gewünschte Richtung lenkt. Bei der Zusatzabsaugeinrichtung handelt es sich dabei um ein, einen Unterdruck erzeugendes Flügelrad. Das Flügelrad ist dabei im allgemeinsten Sinne zu verstehen. Es hat lediglich die Aufgabe, einen Unterdruck zu erzeugen, mit welchem die Späne angesaugt werden können. Bei dem Flügelrad kann es sich beispielsweise um ein Lüfterrad, Turbinenrad, Radiallüfterrad, Schaufelrad etc. handeln. Diese erzeugen zuverlässig einen Unterdruck zum Ansaugen der Späne. Allgemein handelt es sich somit bei dem Flügelrad um ein konstant durchströmtes Laufrad mit Schaufeln. Es ist zwar grundsätzlich denkbar, für das Flügelrad einen separaten Antrieb vorzusehen, doch schlägt die Erfindung weiterhin vor, daß die Drehbewegung der Bearbeitungsvorrichtung zusätzlich dazu verwendet wird, die entstehenden Späne abzuleiten. Hierzu wird der Spindelausgang verwendet. Durch die Ausbildung einer Saugglocke wird die Saugleistung und damit der Abtransport der Späne optimiert. Die Saugglocke des Werkzeugs liegt dabei flächig auf dem zu bearbeitenden Werkstück auf, so daß der Saugraum von der Umgebungsluft abgeschirmt ist. Das Gehäuse weist dabei Luftöffnungen, insbesondere Schlitze auf, damit genügend Luft angesaugt und die Späne mittels der Zusatzabsaugeinrichtung abgesaugt werden können. Dadurch ist gewährleistet, daß die Bearbeitungsfläche absolut sauber ist. Die Luftöffnungen können dabei im Bereich der Kontaktfläche der Saugglocke mit der Oberfläche des Werkstücks ausgebildet sein. Dies bedeutet, daß der angesaugt Luftstrom direkt über die Oberfläche des Werkstücks streicht und somit optimal die Späne mitreißt.

Die Weiterbildung gemäß Anspruch 2 hat den Vorteil, daß durch die spezielle Ausbildung der Flügel des Flügelrades die auftreffenden Späne in radialer Richtung abgelenkt werden, so daß sie in den Ansaugluftstrom der eigentlichen Absaugeinrichtung gelangen.

Die Weiterbildung gemäß Anspruch 3 schlägt vor, daß dem Flügelrad ein Abführkanal für die Späne nachgeordnet ist. Hier kann es sich beispielsweise um ein Späneleitblech, um ein Rohr oder um einen Kanal handeln. Die Grundidee besteht darin, daß dieses Luftleitsystem die beschleunigten Späne in die Maschinenabsaugung leitet.

Schließlich schlägt die Weiterbildung gemäß Anspruch 4 vor, daß die spanabhebende Schneide des Werkzeugs derart ausgebildet ist, daß die entstehenden Späne direkt in den Wirkbereich des Flügelrades gelangen. Die Grundidee besteht darin, daß das eingesetzte Werkzeug eine spezielle Schneide bzw. spezielle Schneiden aufweist, welche die entstehenden Späne gleich bei der SpanabhebUng in eine gewünschte Richtung, nämlich in die Ansaugrichtung lenken.

Ein Ausführungsbeispiel einer erfindungsgemäßen Vorrichtung zur spanabhebenden Bearbeitung von Werkstücken wird nachfolgend anhand der Zeichnungen beschrieben. In diesen zeigt:

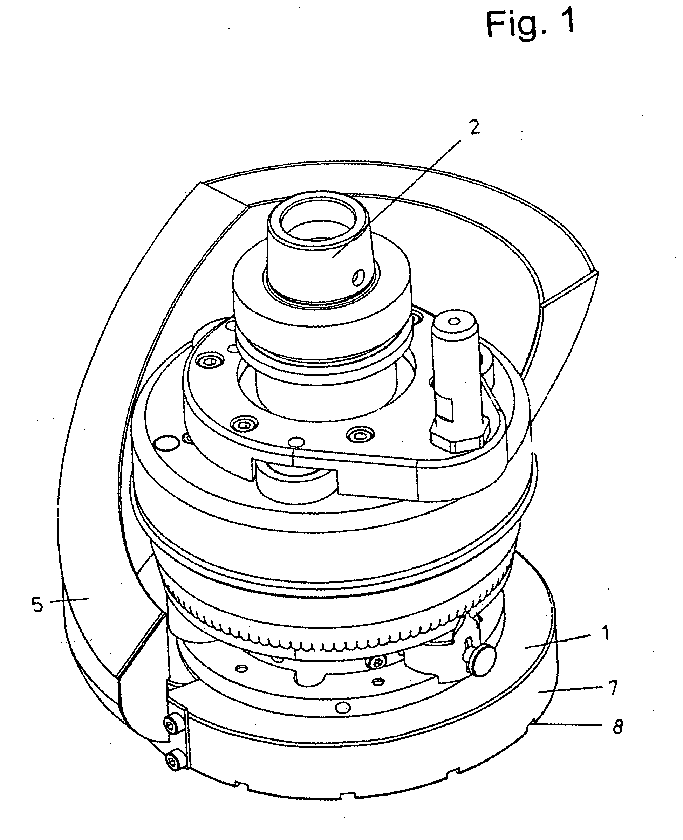

- Fig. 1: eine perspektivische Ansicht der Bearbeitungsvorrichtung;

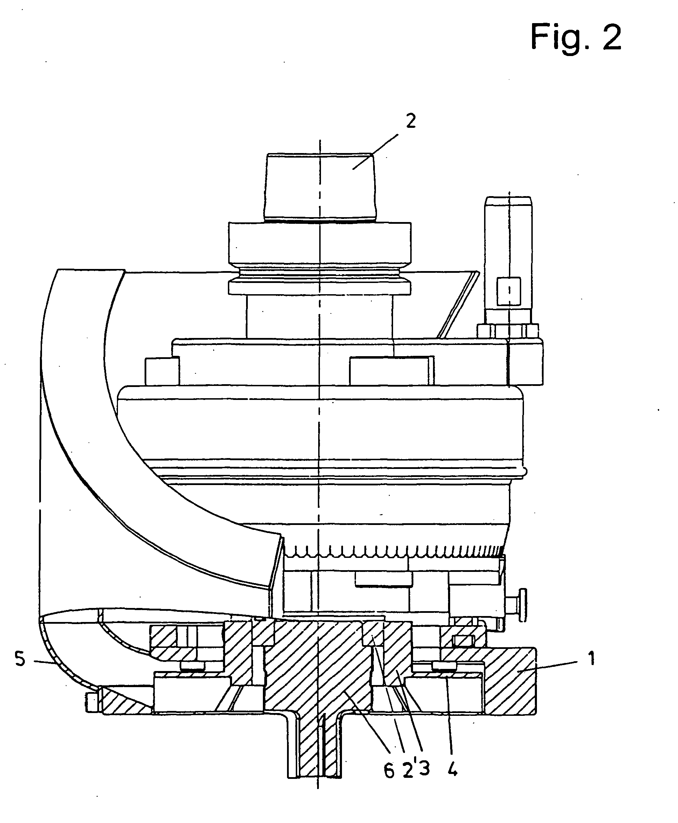

- Fig. 2: einen Längsschnitt durch die Bearbeitungsvorrichtung in Fig. 1.

Das Werkzeugaggregat, wie es in den Zeichnungen dargestellt ist, wird als separate Baueinheit an einer - nicht dargestellten - Werkzeugmaschine zum Bearbeiten von - ebenfalls nicht dargestellten - Werkstücken angeordnet.

Das Werkzeugaggregat weist dabei ein Gehäuse 1 auf, in welchem eine von der Spindel der Werkzeugmaschine angetriebene Drehspindel drehbar gelagert ist. Diese Drehspindel besteht aus der - in der Zeichnung - oberen Antriebsspindel 2 und der - in der Zeichnung - unteren Abtriebsspindel 2'. Ein Werkzeug 6 zur spanabhebenden Bearbeitung von Werkstükken ist an der Abtriebsspindel 2' angeordnet.

Die Abtriebsspindel 2' trägt weiterhin ein Flügelrad 3 mit Flügeln 4. Das Flügelrad 3 ist dabei auf die Abtriebsspindel 2' aufgeschoben und fixiert.

An dieses Flügelrad 3 schließt sich ein Abführkanal 5 in Form eines Späneleitblechs an.

An diesen Abführkanal 5 schließt sich schließlich eine - nicht dargestellte - Absaugeinrichtung an.

Die Funktionsweise ist wie folgt:

Durch Betätigen der Drehspindel bewirkt das Werkzeug 6 eine spanabhebende Bearbeitung des Werkstücks. Bei diesem Werkstück kann es sich um Holz, Holzersatzstoffe, Kunststoffe sowie Aluminium handeln.

Durch die spanabhebende Bearbeitung dieses Werkstücks entstehen Späne. Diese werden mittels der Zusatzabsaugeinrichtung angesaugt und prallen dabei auf die Flügel 4 des Flügelrades 3 und werden dadurch radial in den Abführkanal 5 geleitet. Von dort aus wirkt dann die eigentliche Absaugeinrichtung und saugt die Späne ab.

Das Gehäuse 1 des Werkzeugaggregats ist dabei als Saugglocke 7 ausgebildet. Dies bedeutet, daß diese Saugglocke 7 dichtend auf der Oberfläche des zu bearbeitenden Werkstücks aufliegt. Zur Erzielung eines Saugluftstromes im Innern der Saugglocke 7 sind Luftöffnungen 8 vorgesehen. Diese sind in der bodenseitigen Stirnfläche der Saugglocke 7 bzw. des Gehäuses 1 ausgebildet, also dort, wo die Saugglocke 7 auf dem Werkstück aufliegt.

### Bezugszeichenliste

- 1: Gehäuse
- 2: Antriebsspindel
- 2': Abtriebsspindel
- 3: Flügelrad
- 4: Flügel
- 5: Abführkanal
- 6: Werkzeug
- 7: Saugglocke
- 8: Luftöffnung

## Patentansprüche

1. Wechselbares Werkzeugaggregat für Werkzeugmaschinen zur spanabhebenden Bearbeitung von Werkstücken,
mit einem Gehäuse (1), welches in dem Bereich, in dem Späne abgesaugt werden sollen, als im wesentlichen von der Umgebung luftdicht abgeschirmte sowie dichtend auf der Oberfläche des zu bearbeitenden Werkstücks aufliegende Saugglocke (7) ausgebildet ist,
mit einer in dem Gehäuse (1) gelagerten, von einer Spindel der Werkzeugmaschine antreibbaren Antriebsspindel (2),
mit einer ebenfalls in dem Gehäuse (1) gelagerten Abtriebsspindel (2') zur unmittelbaren oder mittelbaren Aufnahme eines spanabhebenden Werkzeugs (6),
mit einer Absaugeinrichtung für die entstehenden Späne sowie
mit einer der Absaugeinrichtung im Bereich des Werkzeugs (6) vorgeschalteten Zusatzabsaugeinrichtung in Form eines, einen Unterdruck erzeugenden sowie innerhalb der Saugglocke (7) auf der Abtriebsspindel (2') angeordneten Flügelrades (3) mit Flügeln (4),
**dadurch gekennzeichnet,**
**daß** bei auf die Oberfläche des zu bearbeitenden Werkstücks aufgesetzter Saugglocke (7) die Flügel (4) des Flügelrads (3) direkt benachbart zu dieser Oberfläche des zu bearbeitenden Werkstücks innerhalb der Saugglocke (7) angeordnet ist und
**daß** die Saugglocke (7) Luftöffnungen (8) für den Ansaugluftstrom aufweist.

2. Werkzeugaggregat nach dem vorhergehenden Anspruch,
**dadurch gekennzeichnet,**
**daß** die Flügel (4) des Flügelrades (3) derart ausgebildet sind, daß die auf die Flügel (4) aufprallenden Späne in Richtung Absaugeinrichtung leitbar sind.

3. Werkzeugaggregat nach einem der vorhergehenden Ansprüche,
**dadurch gekennzeichnet,**
**daß** dem Flügelrad (3) ein Abführkanal (5) für die Späne nachgeordnet ist.

4. Werkzeugaggregat nach einem der vorhergehenden Ansprüche,
**dadurch gekennzeichnet,**
**daß** die spanabhebende Schneide des Werkzeugs (6) derart ausgebildet ist, daß die entstehenden Späne direkt in den Wirkbereich der Zusatzabsaugeinrichtung gelangen.

## Claims

1. Exchangeable tool assembly for machine tools for machinirg workpieces, with a housing (1), which, in the region in which chips are to be removed by suction, is configured as a suction bell (7) substantially screened in an airtight manner from the surroundings and resting in a sealing manner on the surface of the workpiece to be machined, with a drive spindle (2), which can be driven by a spindle of the machine tool and is mounted in the housing (1), with a driven spindle (2') also mounted in the housing (1) to directly or indirectly receive a machining tool (6), with a suction device for the chips being produced and with an additional suction device connected upstream of the suction device in the region of the tool (6) in the form of an impeller (3) producing a negative pressure and arranged inside the suction bell (7) on the driven spindle (2') with vanes (4), **characterised in that** when the suction bell (7) is placed on the surface of the workpiece to be machined, the vanes (4) of the impeller (3) are arranged directly adjacent to this surface of the workpiece to be machined inside the suction bell (7) and **in that** the suction bell (7) has air openings (8) for the suction air flow.

2. Tool assembly according to the preceding claim, **characterised in that** the vanes (4) of the impeller (3) are configured in such a way that the chips impinging on the vanes (4) can be guided in the direction of the suction device.

3. Tool assembly according to any one of the preceding claims, **characterised in that** a removal channel (5) for the chips is arranged downstream of the impeller (3).

4. Tool assembly according to any one of the preceding claims, **characterised in that** the machining blade of the tool (6) is configured such that the chips being produced arrive directly in the action region of the additional suction device.

## Revendications

1. Groupe d'outillage remplaçable équipant des machines-outils en vue de l'usinage de pièces par enlèvement de copeaux, comprenant
un carter (1) réalisé, dans la région dans laquelle des copeaux doivent être éliminés par aspiration, sous la forme d'une cloche d'aspiration (7) substantiellement blindée avec étanchéité à l'air vis-à-vis de l'espace environnant et reposant, de manière étanche, sur la surface de la pièce à usiner ;
une broche menante (2), montée dans ledit carter (1) et pouvant être entraînée par une broche de la machine-outil ;
une broche menée (2'), semblablement montée dans ledit carter (1) et conçue pour la réception, directe ou indirecte, d'un outil (6) d'enlèvement de copeaux ;
un système d'élimination, par aspiration, des copeaux engendrés ;
ainsi qu'un système additionnel d'élimination par aspiration, implanté en amont dudit système d'élimination par aspiration, dans la région dudit outil (6), et revêtant la forme d'une roue (3) à ailettes (4) qui génère une dépression et est calée sur la broche menée (2'), à l'intérieur de la cloche d'aspiration (7),
**caractérisé par le fait**
**que**, lorsque la cloche d'aspiration (7) est appliquée sur la surface de la pièce à usiner, les ailettes (4) de la roue (3) à ailettes occupent une position directement voisine de cette surface de la pièce à usiner, à l'intérieur de ladite cloche d'aspiration (7) ; et
**que** ladite cloche d'aspiration (7) offre des orifices (8) de passage d'air, dédiés au courant d'air d'aspiration.

2. Groupe d'outillage selon la revendication précédente,
**caractérisé par le fait**
**que** les ailettes (4) de la roue (3) à ailettes sont réalisées de telle sorte que les copeaux, venant impacter lesdites ailettes (4), puissent être guidés en direction du système d'élimination par aspiration.

3. Groupe d'outillage selon l'une des revendications précédentes,
**caractérisé par le fait**
**qu'**un canal (5) d'évacuation des copeaux est ménagé en aval de la roue (3) à ailettes.

4. Groupe d'outillage selon l'une des revendications précédentes,
**caractérisé par le fait**
**que** le tranchant d'enlèvement de copeaux de l'outil (6) est réalisé de façon telle que les copeaux engendrés parviennent, directement, dans la zone opérante du système additionnel d'élimination par aspiration.
